# FASCICULE DE BREVET EUROPEEN

(11) **EP 2 069 066 B1**
(45) Date de publication et mention de la délivrance du brevet: **27.02.2013**
(21) Numéro de dépôt: 07823832.6
(22) Date de dépôt: 14.09.2007
(51) Int. Cl.: C11D 3/30, C11D 1/66, C11D 3/48, C11D 3/02, C11D 3/06, B01J 49/00, C11D 11/00, C11D 3/00, C11D 3/07, C11D 3/08, C11D 3/10, C11D 3/20, C11D 7/10, C11D 7/12, C11D 7/14, C11D 7/16, C11D 7/26, C11D 3/39, C11D 3/04

(54) **AGENT DE NETTOYAGE PREVENTIF ET/OU CURATIF DE MATERIAUX MIS EN CONTACT D'EAU**
MITTEL ZUR VORBEUGENDEN UND/ODER HEILENDEN REINIGUNG VON MATERIALIEN IN KONTAKT MIT WASSER
AGENT FOR THE PREVENTIVE AND/OR CURATIVE CLEANING OF MATERIALS IN CONTACT WITH WATER

(30) Priorité: 18.09.2006 FR 0653785
(43) Date de publication de la demande: 17.06.2009
(73) Titulaire: Gerusz, Roman, 01960 Peronnas (FR); Vanlaer, Antoine, 75004 Paris (FR)
(72) Inventeur: Gerusz, Roman, 01960 Peronnas (FR); Vanlaer, Antoine, 75004 Paris (FR)
(74) Mandataire: Laget, Jean-Loup
(86) Numéro de dépôt international: PCT/FR2007/051937
(87) Numéro de publication internationale: WO 2008/034995

(56) Documents cités:
- EP-A- 0 876 762
- AU-B2- 775 938
- FR-A- 1 600 910
- FR-A- 2 872 048
- US-A- 3 671 629
- US-A- 4 992 208
- US-A- 5 474 704

## Description

La présente invention concerne un agent de nettoyage de matériaux mis en contact d'eau, ainsi que son utilisation pour prévenir l'adhésion des dépôts organiques et inorganiques, telle que la prolifération bactérienne notamment au sein des résines échangeuses d'ions, des appareils d'échanges ioniques comme les adoucisseurs d'eau, des lave-vaisselle ou des filtres, et des circuits d'eaux de piscines, de spa et de locaux collectifs et sanitaires.

Le nettoyage de matériaux mis en contact d'eau domestique ou industrielle est un problème important et d'actualité.

Ce problème concerne par exemple le marché grand public des appareils d'échanges ioniques, tels que les adoucisseurs d'eau potable, ainsi que la marché industriel pour les circuits d'eaux de refroidissement, de déminéralisation, de chaufferies et de production de vapeur des eaux.

Ainsi, les matériaux mis en contact de l'eau peuvent être les zéolithes ou les résines échangeuses d'ions des appareils d'échanges ioniques (adoucisseurs d'eau) pour eau potable ou industrielle, ou la surface des matériaux mis en contact avec de l'eau stagnante, confinée ou courante, tels que des filtres, des circuits, sols de locaux, cuves et citernes.

De tels matériaux présentent en effet l'inconvénient de devoir être périodiquement nettoyées ou assainies.

Par exemple, malgré l'utilisation d'eau potable, un micro dépôt de salissures minérales et organiques, comme la formation d'un biofilm, est observé peu à peu en surface ou dans les micro-pores des billes de résines échangeuses d'ions. Ces phénomènes sont d'ailleurs surtout observés lors d'arrêts prolongés des appareils d'échanges ioniques. Or, ces salissures minérales et organiques auront pour effet de provoquer non seulement la prolifération bactérienne pathogène, mais également de former des odeurs nauséabondes et d'empêcher les échanges ioniques. En outre, les dépôts organiques, inorganiques ne sont pas détruits lors de la régénération classique des résines par la saumure concentrée (NaCl).

C'est pourquoi, dans la plupart des pays tels qu'en Europe et aux Etats-Unis, des directives et recommandations sanitaires ont été mises en place avec obligation de nettoyer et d'assainir (désinfecter) périodiquement les résines échangeuses d'ions lors de leur régénération.

Afin de pallier ce problème, il a été proposé des dispositifs de désinfection automatiques, tels que des mini-électrolyseurs au sel permettant de former du chlore puis de l'hypochlorite de sodium lors du cycle de régénération. Ces dispositifs à base de chlore présentent l'inconvénient de réagir et de dégrader notamment les résines échangeuses d'ions, conduisant les fabricants de ces résines à prendre des mesures restrictives de garanties en cas d'usage de produits ou systèmes concentrés en chlore.

De nouvelles résines échangeuses d'ions anti-microbiennes ont par ailleurs été proposées.

Le document US 6 531 519 concerne des résines échangeuses d'ions, caractérisées par le fait que les agents anti-microbiens sont encapsulés et fixés dans les micro-pores de la résine. Toutefois, la synthèse de ces résines anti-microbiennes est complexe et présente un coût de revient élevé. En outre, ces résines anti-microbiennes n'empêchent pas le dépôt au cours du temps de salissures minérales et organiques formant peu à peu une barrière aux échanges ioniques.

Dans le document US 4 764 280, il est proposé un servo-système permettant de réduire le goût et l'odeur de l'eau, en particulier l'odeur « d'oeuf pourri» causée par les bactéries anaérobies non pathogènes, telles que les *Desulfuviuibrio desulfuricaus.* Toutefois, ce servo-système n'élimine pas le micro-dépôt des salissures minérales et organiques qui s'accumule en surface des résines, formant ainsi une barrière aux échanges ioniques.

Le document US 6 340 712 décrit un agent de régénération sous forme liquide, sans chlore, à base d'acétate de potassium et d'adjuvants, tels que l'acide citrique et de tensioactifs mouillants en quantité très faible, afin de limiter le développement bactérien. Cependant, dans ce cas également, le micro-dépôt de salissures minérales et organiques n'est pas complètement éliminé.

L'usage de l'eau oxygénée (peroxyde d'hydrogène liquide) concentrée entre 20 % et 40 % a également été préconisé comme moyen de désinfection des résines échangeuses d'ions permettant de remédier à ces inconvénients. Toutefois, en plus de la difficulté de réaliser un dosage précis en fonction du mode de régénération et du volume de résines, cette opération périodique est nécessaire deux fois par an et peut être oubliée par l'utilisateur de l'adoucisseur ionique.

Par ailleurs, on connaît à travers le document US 4,116,860 une composition régénérante pour résines échangeuses d'ions pouvant se trouver sous forme solide et plus particulièrement sous forme de pastille comprenant 70-80 % en poids de chlorure de sodium ou de potassium et 5-15 % en poids de carbonate de sodium ou de potassium.

On connaît par ailleurs à travers le document US 5 474 704 une composition afin de régénérer les résines échangeuses de cations typiquement utilisées dans les adoucisseurs d'eau. Plus particulièrement, la composition décrite dans ce document a pour but de séquestrer le fer. Cette composition comprend 99 à 99,75 % de chlorure de sodium, 0,00125 à 0,90 % de gluconate de sodium ou de potassium et est mise sous forme pastilles de manière conventionnelle.

Le document US 4,261,849 décrit une composition nettoyante afin d'éliminer les odeurs, de traiter ou nettoyer des surfaces et de les protéger de la dégradation microbienne. Cette composition comprend de manière préférée du bicarbonate de sodium et du chlorure de sodium et de la terre à foulon et se trouve sous forme de poudre sèche. Ainsi, ce document ne décrit pas une composition destinée à être appliquée pour le nettoyage des matériaux mis en contact d'eau.

Le document FR-1600910 décrit une composition de nettoyage pour cuvettes de toilette renfermant 20 à 80 % en poids d'un sulfate acide soluble dans l'eau, de 70 % à 10 % en poids d'un chlorure soluble dans l'eau, tel que le chlorure de sodium, en tant que "diluant", et de 0,5 % à 20 % d'un agent de blanchiment oxygéné stable aux acides. En raison de la présence de sulfate acide, cette composition ne peut se trouver sous la forme de pastilles.

Il est connu de US 4992208 d'ajouter un additif anti-effritement tel que du tripolyphosphate de sodium à des pastilles de chlorure de sodium utilisée pour la régénération des résines échangeuses d'ions d'adoucisseurs d'eau afin d'éviter la désagrégation de ces pastilles dans l'eau. Cependant, ce brevet est muet sur une éventuelle action anti-bactérienne car la composition décrite ne renferme pas d'oxydant, ni de précurseur d'oxydant.

Le document JP60-255147 décrit un agent de régénération pour des adoucisseurs d'eau qui est préparé à partir d'un électrolyte relarguant des ions potassium comme le chlorure de potassium ou le carbonate de potassium. Afin d'éliminer les dépôts de fer, ce document décrit l'utilisation d'un agent oxydant soluble dans l'eau, tel que du percarbonate de sodium ou de l'hypochlorite de potassium. Toutefois, afin de mettre cet agent de régénération sous pastille, il est nécessaire d'utiliser un liant, tel que de la gomme de guar ou de la polyvinylpyrrolidone, dans l'électrolyte relarguant les ions potassium et l'agent oxydant soluble dans l'eau, de malaxer le mélange avec un solvant volatil, puis de passer le mélange ainsi obtenu à travers un tamis et enfin d'évaporer le solvant.

Le document UK2113707 concerne un procédé complexe afin de préparer des compositions détergentes sous forme de granules destinées

à être utilisées dans les machines à laver. L'exemple 4 page 7 décrit une composition comprenant entre autres des détergents dispersifs : du tripolyphosphate de sodium, du carbonate de sodium, un sel alcalin tel que du chlorure de sodium.

Par ailleurs, on connaît d'après le document WO 97/28241 un procédé afin de former un produit détergent solide (dur) destiné à être utilisé dans les machines à laver comprenant 0,5 à 10 % d'un alkylpolyglycoside, 0,1 à 10 % d'un composant de base sous forme de sel tel que le chlorure de sodium, 30 à 75 % d'un composant alcalin hydratant tel que le carbonate de sodium.

Le document WO 03/02867, décrit une composition granulaire parfumée destinée à être utilisée dans les machines à laver comprenant outre du parfum, du carbonate de sodium, du tripolyphosphate de sodium du chlorure de sodium et un tensio-actif non ionique.

Enfin, le document WO 90/04960 décrit une composition de parfum destinée à être intégrée dans des pots-pourris, des substances chimiques en poudre, des désodorisants pour animaux domestiques... ou dans de l'eau chaude. Ce document ne décrit pas un agent de nettoyage de matériaux mis en contact d'eau, mais une composition parfumée.

En conclusion, aucun des documents précités ne décrit une composition simple et peu onéreuse permettant d'obtenir un agent de nettoyage des matériaux mis en contact d'eau sous forme solide, tel que sous forme de pastilles, qui ne se délitent pas à l'air ambiant ou sous la pression exercée, par exemple, par la main de l'utilisateur.

De plus, l'agent de nettoyage de matériaux mis en contact d'eau selon la présente invention peut être utilisé afin de nettoyer et de prévenir aussi l'adhésion des dépôts organiques ou inorganiques, telle que la prolifération bactérienne, dans les lave-vaisselle, les filtres et les circuits d'eau.

L'invention a pour but de proposer un agent de nettoyage de matériaux mis en contact d'eau qui présente de nombreuses qualités et qui permet d'éviter en partie les effets secondaires susmentionnés. Plus particulièrement, l'invention a pour but de proposer un produit permettant de prévenir l'apparition de matière organique et/ou de traiter les matériaux mis en contact d'eaux, notamment ceux traités par un appareil d'échanges ioniques d'eau potable ou industrielle (adoucisseurs d'eau) ou présent dans un lave-vaisselle, ainsi que les filtres ou circuits d'eaux de piscines et spa et ceux des locaux collectifs et sanitaires.

La présente invention vise également à proposer un procédé permettant d'agglomérer les divers constituants convenant pour la présente invention, notamment lorsque ces derniers sont sous forme liquide.

L'invention concerne un agent de nettoyage préventif et/ou curatif de matériaux mis en contact d'eau, selon le libellé de la revendication 1.

Avantageusement, ledit précurseur de peroxyde d'hydrogène sous forme solide, tel que sous forme de granulés, est recouvert d'un revêtement mince protecteur, à base de sels, tels que le sulfate de sodium, de potassium, de calcium, ou de magnésium.

Selon une première caractéristique, l'agent de nettoyage peut aussi comprendre au moins un catalyseur spécifique de décomposition du peroxyde d'hydrogène, tel que les sels métalliques de fer, de cuivre, de cobalt, de zinc, de molybdène, d'argent ou leurs mélanges.

Selon une deuxième caractéristique, l'agent de nettoyage peut aussi comprendre au moins un stabilisant du peroxyde d'hydrogène, tel que les chélates : les phosphonates, les gluconates de sodium, les pyrophosphates de sodium acides, les phosphates monocalciques ; ou des acides organiques : l'acide citrique, l'acide maléique, l'acide tartrique ; ou l'acétanilide ; ou des agents anti-mottants : silices précipitées ; ou leurs mélanges.

De manière avantageuse, ledit stabilisant du peroxyde d'hydrogène représente 0,01 % à 5 %, de préférence de 0,5 % à 1 %, en poids, par rapport au poids total de l'agent de nettoyage.

De préférence, ledit agent détergent dispersant est choisi parmi : le tripolyphosphate de sodium, le tripolyphosphate de potassium, le silicate de sodium ou de potassium, le métasilicate de sodium ou de potassium, le gluconate de sodium ou leurs mélanges, et ledit tensio-actif non ionique présentant au moins une action détergente est choisi parmi : les savons gras, les alkylpolyglucosides, les oxydes d'amines, les esters de polyols, les alkanolamides, les saponines ou leurs mélanges.

Avantageusement, ledit agent détergent alcalin est choisi parmi le carbonate de sodium ou de potassium, le bicarbonate de sodium ou de potassium.

Particulièrement, l'agent de nettoyage comprend 25 % à 99,9 %, de préférence 95% à 98%, en poids, de chlorure de sodium, 0,01 % à 75 %, en poids, d'au moins un agent détergent dispersif et/ou un tensioactif non ionique présentant une action détergente, 0,01 % à 45%, de préférence de 0,5 % à 3 %, en poids, d'au moins un détergent alcalin et 0,01 % à 50 %, de préférence de 1 % à 3 %, en poids, d'au moins un agent oxydant, par rapport au poids total de l'agent de nettoyage.

Préférentiellement, pour l'application dans les appareils d'échanges ioniques comme au sein des adoucisseurs d'eau, ledit agent de nettoyage comprend de 95,5 % à 98 % de chlorure de sodium, de 0,01 % à 3 % de tripolyphosphate de sodium, de 0,5 % à 1,5 % de carbonate de sodium, de 1 % à 3 % de percarbonate de sodium et de 0,01 % à 0,5 % de gluconate de sodium, en poids, par rapport au poids total de l'agent de nettoyage.

Un autre but de l'invention concerne un procédé de fabrication dudit agent de nettoyage tel que décrit ci-dessus comprenant les étapes consistant à :
- pulvériser avec de l'eau sur le chlorure de sodium, et éventuellement sur divers additifs sous forme solide préalablement mélangés avec ledit chlorure de sodium au moins un composé détergent, tel qu'un détergent dispersant, un tensioactif détergent sous forme liquide et/ou divers additifs sous forme liquide, tels que : des agents biocides, des tensioactifs mouillants, des hydrofuges, des catalyseurs de décomposition de précurseurs de peroxyde d'hydrogène et des stabilisants de décomposition du peroxyde d'hydrogène, de manière à obtenir un mélange sous forme solide,
- éventuellement, mélanger le mélange obtenu à l'étape précédente avec au moins un composé détergent et/ou des additifs sous forme solide,
- et à mouler l'agent de nettoyage dans la forme souhaitée : pastilles, granulés, tablettes, comprimés ou galets.

La présente invention a également pour objet l'utilisation de l'agent de nettoyage selon l'une des caractéristiques ci-dessus pour le nettoyage préventif et/ou curatif de matériaux mis en contact d'eau tels que des résines échangeuses d'ions, des appareils d'échanges ioniques comme les adoucisseurs d'eau, des lave-vaisselle, des filtres, et des circuits d'eaux de piscines, de spa et de locaux collectifs et sanitaires.

L'invention sera mieux comprise et d'autres buts, détails, caractéristiques et avantages de celle-ci apparaîtront plus clairement au cours de la description explicative détaillée qui va suivre d'un mode de réalisation de l'invention, donné à titre purement illustratif et non limitatif.

Tel qu'indiqué précédemment, l'invention concerne un agent de nettoyage préventif et/ou curatif de matériaux mis en contact d'eau, selon le libellé de la revendication 1.

Le demandeur a découvert de manière surprenante que l'adjonction au chlorure de sodium, de détergents dispersants et/ou de tensioactifs non ioniques présentant au moins une action détergente, d'agent oxydant et éventuellement de divers additifs (détergents alcalins, agents biocides, tensioactifs mouillants, chélatants), qu'ils soient sous forme liquide ou solide, permet de les agglomérer sous forme solide (pastilles, tablettes..). Ceci est sans doute rendu possible grâce à l'effet liant du chlorure de sodium.

Ce produit est ainsi de préférence sous forme de poudre ou de granulés, de pastilles, de galets, de tablettes, de comprimés non friables/non délitables qui vont se désintégrer facilement dans l'eau à traiter.

Par conséquent, ce mode de présentation présente ainsi l'avantage d'être facile d'utilisation car maniable et d'être facilement dosable, ce qui représente un réel apport pour l'utilisateur d'agent de nettoyage des matériaux mis en contact de l'eau.

Le ou les sels alcalins permettent également de régénérer les résines échangeuses d'ions et celles des appareils d'échanges ioniques pour eaux potables ou industrielles, telles que les résines des adoucisseurs d'eau.

Ils présentent aussi l'avantage d'être non polluants et de permettre, selon l'invention, le nettoyage et l'assainissement des surfaces des matériaux en contact de l'eau.

La quantité de ces sels alcalins et plus particulièrement de chlorure de sodium peut aller jusqu'à 99,9 %, en poids, par rapport au poids total de l'agent de nettoyage. La quantité de chlorure de sodium est comprise entre 95 % à 98 %, pour une utilisation avantageuse de l'agent de nettoyage dans les échangeurs ioniques ou adoucisseurs d'eau. Les pourcentages ci-dessus sont donnés en poids par rapport au poids total de l'agent de nettoyage.

De manière particulièrement préférée, le sel alcalin est le chlorure de sodium pur de qualité alimentaire.

Les autres sels alcalins convenant pour la présente invention en plus du chlorure de sodium sont choisis parmi : le chlorure de potassium, le chlorure d'ammonium, l'acétate de sodium, l'acétate de potassium, le formiate de sodium ou de potassium, ou leurs mélanges.

Les détergents dispersants convenant pour la présente invention peuvent être : le tripolyphosphate de sodium ou de potassium, le silicate de soude ou de potassium, le métasilicate de sodium ou de potassium, le gluconate de sodium ou leurs mélanges, de préférence le détergent dispersif sera du tripolyphosphate de sodium ou de potassium. De manière encore plus préférée, le détergent dispersant convenant pour la présente invention sera du tripolyphosphate de sodium ou de potassium soit du type anhydre, soit du type hexahydraté. On pourra également envisager d'utiliser un mélange hybride du type tripolyphosphate de sodium et tripolyphosphate de potassium ou tripolyphosphate de sodium et phosphate/sulfate de potassium, et ce afin d'augmenter la solubilité du tripolyphosphate en milieu sodique concentré.

L'agent de nettoyage selon la présente invention comprend également au moins un détergent alcalin.

Ce dernier est choisi parmi : le carbonate de sodium ou de potassium, le bicarbonate de sodium ou de potassium

L'agent dispersant ou alcalin est de préférence classé contact alimentaire, notamment si l'agent de nettoyage est utilisé afin de nettoyer les résines d'un échangeur ionique pour eau potable.

Le ou les agents détergents dispersants ou alcalins peuvent être sous forme solide : granulés ou sous forme de poudre, mais également sous forme liquide, par exemple : une solution de tripolyphosphate de potassium à 50 %.

Le dosage du ou des agents détergents dispersants dans le mélange est variable, mais compris de 0,01 % à 3% en poids.

Avantageusement, la quantité de détergent dispersant est compris entre 0,5 % à 3 %, lorsque l'agent de nettoyage est utilisé dans les échangeurs ioniques ou les adoucisseurs d'eau, de 0,5 % à 3% lorsque celui-ci est utilisé dans le domaine des lave-vaisselle et entre 0,5 % et 3% lorsque l'agent de nettoyage est utilisé dans les filtres et circuits d'eaux de piscines et spa, ou locaux collectifs et sanitaires. Les pourcentages ci-dessus sont donnés en poids par rapport au poids total de l'agent de nettoyage.

Le demandeur a en effet constaté, d'une part, qu'au delà d'une quantité de 5 % d'agents détergents dispersifs tels que du tripolyphosphate de sodium dans les échangeurs ioniques, il y a un risque élevé de dépôt de résidu non solubilisé de ce composé sur la surface des résines. D'autre part, le demandeur a constaté que le fait de mélanger le tripolyphosphate, qui est un composé qui s'hydrate à température ambiante, avec du chlorure de sodium permettait de contrecarrer cet inconvénient et qu'il était plus facile d'obtenir une pastille dure, qui ne se délite pas facilement. Une autre manière de pallier cet inconvénient (hydratation du tripolyphosphate de sodium) serait d'utiliser un grade de tripolyphosphate de sodium ou de potassium pré-hydraté.

En outre, pour des raisons commerciales, le tripolyphosphate de sodium pourra être coloré au préalable avec des colorants alimentaires.

Le détergent dispersant a pour fonction de disperser et de déterger les salissures minérales et organiques. Il apporte aussi comme le tripolyphosphate de sodium un complément d'alcalinité à l'agent de nettoyage. En outre, ce dernier composant est compatible avec le sel, les détergents alcalins, les oxydants peroxydes et les complexants chélatants.

De même, l'agent détergent alcalin représentera de préférence 0,01 % à 3% de l'agent de nettoyage. Avantageusement, la quantité de détergent alcalin est compris entre 0,5 % à 3 %, lorsque l'agent de nettoyage est utilisé dans les échangeurs ioniques ou dans les adoucisseurs d'eau, de 0,5 % à 3 % lorsque celui-ci est utilisé dans le domaine des lave-vaisselle et entre 0,5 % et 3 % lorsque l'agent de nettoyage est utilisé dans les filtres et circuits d'eaux de piscines et spa, ou locaux collectifs et sanitaires. Les pourcentages ci-dessus sont donnés en poids par rapport au poids total de l'agent de nettoyage.

Au delà d'un poids de 5 % de détergent alcalin lorsque l'agent de nettoyage est utilisé dans les échangeurs ioniques, le demandeur a en effet découvert qu'il y avait un risque d'excès de détergent alcalin inutile par exemple pour l'application au sein des échangeurs ioniques. Le détergent alcalin sera de préférence le carbonate de sodium. Ce dernier est en effet compatible avec le sel (chlorure de sodium), le tripolyphosphate de sodium, les oxydants peroxydes et les complexants chélatants.

L'agent de nettoyage peut comprendre également un tensioactif non-ionique présentant au moins une action détergente, appelé par la suite « tensioactif détergent ».

Ces tensioactifs seront de préférence non cationiques car ces derniers se lieraient aux sites de la résine échangeuse d'ions, empêchant ainsi son bon fonctionnement. Par ailleurs, le tensioactif détergent doit être efficace afin de nettoyer les matériaux en contact de l'eau, mais aussi agréé contact alimentaire, notamment dans le cas des résines échangeuses d'ions des échangeurs ioniques d'eau potable En outre, le tensioactif détergent ne doit pas trop mousser à un niveau normal d'utilisation afin d'empêcher l'introduction d'air dans les échangeurs ioniques (adoucisseurs d'eau).

Les tensioactifs détergents non-ioniques convenant pour la présente invention peuvent être par exemple du type : des savons gras, des alkylpolyglucosides, tels le SIMULSOL^{®} SL 4 ou le SIMULSOL^{®} SL10 ou le SIMULSOL^{®} SL11 commercialisés par SEPPIC SA, les oxydes d'amines (AMMONYX® D040 ou LO-E® de STEPAN Europe), des esters de polyols, des alkanolamides, des saponines ou leurs mélanges.

Le tensioactif détergent peut se présenter sous forme solide, tel que de la poudre, ou sous forme liquide. Dans ce dernier cas, il peut être pulvérisé directement sur les particules de sels alcalins, ou préalablement absorbé sur support solide. Ce support solide peut être par exemple du type poudre de silice précipitée, ou du kieselgur, de la terre de diatomées, des argiles en poudre, ledit détergent dispersant si celui-ci est sous forme solide ou encore un autre tensioactif non-ionique sous forme de poudre, tel que les saponines.

Ces supports sont généralement utilisés à dose faible, de l'ordre de 0,001 % à 10 %, en poids, par rapport au poids total de l'agent de nettoyage. Selon les proportions initiales de constituants sous forme liquide de la présente invention, l'homme du métier saura choisir le support le plus approprié sachant que la silice et la terre de diatomées peuvent absorber plus de la moitié de leur poids contre 5 % maximum de leur poids pour le détergent ou le sel, afin que ces derniers restent sous forme de poudre relativement sèche et maniable.

Ce tensioactif détergent ne représente, de préférence, pas plus de 2 %, en poids, par rapport au poids total de l'agent de nettoyage.

L'agent de nettoyage peut également comprendre des tensioactifs mouillants, comme des alcools éthoxylés tels que MAKON^{®} NF12 commercialisé par STEPAN Europe, mais également des savons gras, des alkylpolyglucosides, tels le SIMULSOL^{®} SL 4 ou le SIMULSOL^{®} SL10 ou le SIMULSOL^{®} SL11 commercialisés par SEPPIC SA, les oxydes d'amines (AMMONYX^{®} D040 ou LO-E^{®} de STEPAN Europe), des saponines ou leurs mélanges qui présentent les propriétés d'être à la fois détergents et mouillants.

Ce tensioactif mouillant représente, de préférence entre 0,01 % et 2 %, en poids, par rapport au poids total de l'agent de nettoyage.

L'adjonction d'un détergent dispersant et alcalin et/ou d'un tensioactif détergent mouillant à des sels alcalins vont permettre de :
- mouiller les dépôts organiques ou salissures minérales en surface des micro-pores des matériaux, ce qui aura pour effet de les décoller et de les disperser ;
- saponifier et émulsionner les matières organiques, qui pourront dès lors s'éliminer aisément lors d'une étape de rinçage par exemple.

Le détergent dispersant et alcalin et/ou tensioactif détergent présentent aussi l'avantage d'améliorer le nettoyage et la désincrustation des salissures minérales non oxydables, notamment celles fixées dans les micro-pores des résines échangeuses d'ions par exemple.

De plus, le nettoyage en profondeur des micro-pores de la surface de ces matériaux permet non seulement d'éviter une possible formation de biofilm mais aussi d'assurer en permanence un bon échange cationique : Ca⁺⁺ ↔2 Na⁺. Or, ce bon échange cationique est indispensable pour le bon fonctionnement de la résine.

L'agent de nettoyage comprend également un agent oxydant, tel que les précurseurs de peroxydes d'hydrogène sous forme solide.

Ces précurseurs solides de peroxyde d'hydrogène peuvent être choisis, par exemple, parmi : les perborates (NaBO₃, nH₂O), les percarbonates (2Na₂CO₃, 3H₂O₂), les persulfates ou permonosulfates (KHSO₅), les peroxydes alcalins (CaO₂, MgO₂, etc.), ou le permanganate de potassium, ou le ferrate de potassium (K₂FeO₄). De préférence, le percarbonate de sodium ou le carbonate de sodium peroxyhydraté (2Na₂CO₃, 3H₂O₂) sont utilisés en tant que précurseur de peroxyde. L'intérêt des percarbonates est qu'ils sont purs et qu'ils dégagent environ 3 fois plus de peroxyde d'hydrogène que d'autres précurseurs, tels que les permonosulfates.

Ledit précurseur de peroxyde d'hydrogène convenant pour la présente invention se présente sous forme de poudre ou de granulés.

Par exemple, les précurseurs de peroxyde d'hydrogène comme les percarbonates de sodium et plus particulièrement les percarbonates de sodium peroxyhydraté peuvent se présenter sous forme de poudre ou de granulés de diamètre variant de 0,1 mm à 5 mm facilement maniables.

Le précurseur de peroxyde d'hydrogène représente 0,01 % à 3 % pour l'application dans les appareils d'échanges ioniques en poids, par rapport au poids total de l'agent de nettoyage.

Le demandeur a en effet découvert qu'au-delà de 10% en poids de précurseur de peroxyde d'hydrogène par rapport au poids total de l'agent de nettoyage, il y a un risque d'excès d'oxydant inutile par exemple pour l'application dans les appareils d'échanges ioniques.

Les précurseurs de peroxyde d'hydrogène sont solubles dans l'eau à température ordinaire. Par exemple, le percarbonate de sodium se solubilise facilement dans l'eau, de l'ordre de 140 g par litre d'eau, et libère un taux d'oxygène actif élevé : 1 000 g de percarbonate de sodium libèrent en effet 300 g de peroxyde d'hydrogène pur, soit environ 140 g d'oxygène actif. Il libère également du carbonate de sodium qui rend le milieu liquide basique et protège ainsi les bacs et circuits des conduites d'eau domestique ou industrielle des risques de corrosion. De plus, le carbonate de sodium a une action détergente complémentaire favorable au nettoyage des surfaces contaminées par les salissures. Enfin ces percarbonates alcalins sont non nocifs pour l'environnement, non bioaccumulables et non cancérigènes selon l'IARC.

Le précurseur solide aura ainsi pour effet, après dissolution dans l'eau, de libérer du peroxyde d'hydrogène puis de l'oxygène natif ayant une action oxydante sur les salissures organiques et sels ou oxydes minéraux résiduelles. En conséquence, le précurseur de peroxyde d'hydrogène permet une action préventive de l'adhésion de ces salissures.

Le mode d'action du peroxyde d'hydrogène est essentiellement dû au fait que les matières organiques et sels ou oxydes minéraux soit en suspension aqueuse, soit fixées en surface des matériaux, sont oxydées réduisant ainsi le risque de leurs adhésions en surfaces des matériaux au contact de l'eau, ainsi que leur putréfaction (dégagement de mauvaises odeurs..).

Il est à noter que les précurseurs solides de peroxyde d'hydrogène, tels que les percarbonates sont sensibles à la présence d'eau et qu'il est nécessaire de les stocker et de les manipuler à l'abri de l'humidité. C'est pourquoi, de préférence, dans le cadre de l'invention sera utilisé un précurseur de peroxyde d'hydrogène présenté sous forme de granules (diamètre compris entre 0,1 mm et 5 mm) sur lesquels est déposé un revêtement mince protecteur permettant de durcir et de stabiliser les granulés de précurseur au stockage.

Ce revêtement correspond à un revêtement mince protecteur, à base de sels, tels que le sulfate de sodium, de potassium, de calcium, ou de magnésium. Ce revêtement est obtenu par pulvérisation de sulfates à la surface du précurseur. Il peut être déposé, par exemple, en fin de fabrication dudit précurseur de peroxyde d'hydrogène.

Ce revêtement permet de durcir la surface du précurseur et ainsi de le rendre plus stable.

Avantageusement, ledit revêtement protecteur représente 0,001 % à 20 %, de préférence de 0,1 % à 10 % et de manière avantageuse de 1 % à 5 %, en poids par rapport au poids du précurseur de peroxyde d'hydrogène.

Par exemple, de tels précurseurs, tels que les percarbonates de sodium stabilisés avec revêtement sont actuellement commercialisés sous la marque OXYPER-S^{®} de SOLVAY ou ECOX-^{®} de KEMIRA.

Selon les domaines d'application, il est possible d'introduire dans l'agent de nettoyage comprenant au moins un précurseur de peroxyde d'hydrogène des catalyseurs spécifiques complémentaires, tels que des sels métalliques à base de fer ou de cuivre, de molybdène ou encore d'argent et/ou des activateurs du type TAED (tétra-acétyl-éthylène-diamine).

Ce catalyseur peut être présent à très faible dose, c'est-à-dire il ne représente pas plus de 5 %, et de manière encore plus avantageuse pas plus de 1,5 %, en poids, par rapport au poids total de l'agent de nettoyage.

De plus, il est possible d'introduire directement dans l'agent de nettoyage ou dans le revêtement protecteur dudit précurseur de peroxyde d'hydrogène décrit ci-dessus, ces catalyseurs spécifiques.

Ces catalyseurs ne représentent dans ce cas là, pas plus de 2 %, de préférence pas plus de 1 % et de manière encore plus préférée pas plus de 0,3 %, en poids, par rapport au poids du revêtement protecteur.

Ledit ou lesdits catalyseurs permettent d'activer fortement la décomposition du peroxyde d'hydrogène libéré par le précurseur lors de sa mise en contact avec l'eau, et de réaliser rapidement les réactions d'oxydation, et ce même à basses températures (5°C).

Si, au contraire, le ralentissement de la décomposition du peroxyde d'hydrogène liquide est souhaité afin d'étaler son activité oxydante dans le temps, il est possible d'introduire dans l'agent de nettoyage et/ou dans le revêtement protecteur de peroxyde d'hydrogène, des stabilisants du peroxyde d'hydrogène.

Ces stabilisants du peroxyde d'hydrogène peuvent être par exemple : des agents chélatants du type phosphonates ou gluconates de sodium, des pyrophosphates de sodium acides, des phosphates monocalciques monohydratés, ou des acides organiques, tels que l'acide citrique, l'acide maléique, l'acide tartrique, l'acétanilide, ainsi que des agents anti-mottants, tels que les silices précipitées.

De plus, ces agents chélatants, tels que le gluconate de sodium, présentent la particularité de complexer en milieu alcalin les ions métalliques du type: fer, manganèse, aluminium, plomb... Cette particularité présente un avantage certain pour l'application dans les appareils d'échanges ioniques notamment afin d'éviter le dépôts de ces ions métalliques sur les résines. En outre, le gluconate de sodium est un inhibiteur de croissance cristalline et il permet d'éviter les dépôts de sels ou de tartres. Enfin, ce composé est également un inhibiteur de la corrosion (fonte, acier).

La quantité des stabilisants du peroxyde d'hydrogène ne dépasse pas plus de 5 %, de préférence pas plus de 2 %, et de manière encore plus avantageuse entre 0,1 % et 1 %, en poids, par rapport au poids total de l'agent de nettoyage.

Le ou les stabilisants du peroxyde d'hydrogène peuvent être compris dans le revêtement protecteur appliqué à la surface du précurseur.

Ainsi, l'agent de nettoyage selon la présente invention présente les avantages d'être simple, peu onéreux et efficace afin de prévenir l'apparition de matières organiques et inorganiques. Il maintient en effet les surfaces en contact avec de l'eau propre, empêchant la formation de leurs adhésions, élément majeur du risque de développement et de prolifération pathogène.

Ledit agent de nettoyage peut également comprendre au moins un agent biocide.

Les agents biocides permettent d'éliminer les germes pathogènes résiduels possibles. Ainsi, l'agent biocide va compléter l'action du détergent.

Les agents biocides sont choisis parmi les bactéricides, les virucides, les fongicides tels que : les ammonium quaternaires comme le chlorure de didécyldiméthylammonium, les agents biocides de types iodophores ou biguanides, les dérivés aminé du type triamines, telles que la lauryldiéthylènetriamine, la dioctyldiéthylènetriamine, les huiles essentielles comme les essences de lavande, de thym, de romarin, de niaouli, de cannelle, de pin ou des dérivés terpéniques ou leurs mélanges.

Parmi les agents biocides, les ammoniums quaternaires, tels que le chlorure de didécyldimethylammonium seront utilisés de préférence en ajout au détergent dispersant. Ce produit est par exemple efficace à une dose de 50 ppm en tant que bactéricide selon la Norme AFNOR NF T 72-151 sur *Escherichia coli* 54127, *Pseudomonas aeruginosa* A22, *Staphylococcus aureus* 53164, *Streptococcus faecalis* 5855 ou encore sur *Mycobactenum smegmatis* 7326.

Les agents biocides peuvent se présenter sous forme solide, telle que de la poudre ou des granulés et/ou sous forme liquide. Dans ce dernier cas, l'agent biocide est préalablement absorbé soit en surface du composé détergent sous forme solide, soit sur support de silice précipitée, de kieselgur, de terre de diatomées, d'argile en poudre ou de saponines, soit pulvérisé directement sur les particules de sels alcalins ou sur le composé détergent sous forme solide.

Les agents biocides sont utilisés à des doses variables, en fonction des besoins et de la quantité de détergent dispersant au sein de l'agent de nettoyage. Ils représentent préférentiellement pas plus de 25 %, de manière avantageuse entre 0,001 % à 5 % et de manière encore plus préférée de 0,01 % à 2 %, en poids, par rapport au poids total de l'agent de nettoyage.

L'agent de nettoyage peut aussi être utilisé en association avec des enzymes protéolytiques qui dissolvent les graisses et favorisent la désinfection et le nettoyage des matériaux en contact d'eau.

Selon une caractéristique de l'invention, l'agent de nettoyage peut aussi comprendre un hydrofuge du type stéarate de magnésium ou de calcium.

La quantité de l'hydrofuge varie respectivement entre 0,001 % à 2 %, en poids, par rapport au poids total de l'agent de nettoyage.

L'hydrofuge présente l'avantage d'améliorer la résistance à l'humidité de l'agent de nettoyage et ainsi de faciliter son stockage. En outre, il permet la manipulation dudit agent et ce même dans un environnement humide.

L'agent de nettoyage peut également comprendre des excipients du type : anti-mousses, séquestrants, agents anti-redéposition ou des parfums. Ces divers constituants sont bien connus de l'homme du métier.

Un autre but de l'invention concerne un procédé de fabrication dudit agent de nettoyage comprenant les étapes consistant à :
- pulvériser avec de l'eau sur le chlorure de sodium et éventuellement sur divers additifs sous forme solide préalablement mélangés avec ledit chlorure de sodium, au moins un composé détergent, tel qu'un détergent dispersant, un tensioactif détergent sous forme liquide et/ou divers additifs sous forme liquide, tels que: des agents biocides, des tensioactifs mouillants, des hydrofuges, des catalyseurs de décomposition de précurseurs de peroxyde d'hydrogène et des stabilisants de décomposition du peroxyde d'hydrogène, de manière à obtenir un mélange sous forme solide,
- éventuellement, mélanger le mélange obtenu à l'étape précédente avec au moins un composé détergent et/ou des additifs, sous forme solide,
- et à mouler l'agent de nettoyage dans la forme souhaitée : pastilles, granulés, tablettes, comprimés ou galets.

Ainsi, ce procédé particulier permet d'agglomérer les différents constituants convenant pour la présente invention, même si ces derniers se présentent sous forme liquide.

La présente invention a également pour objet l'utilisation de l'agent de nettoyage pour le nettoyage préventif et/ou curatif de matériaux mis en contact d'eau, comme les zéolithes ou les résines échangeuses d'ions et les appareils d'échanges ioniques comme les adoucisseurs d'eau, et les filtres, et circuits d'eaux de piscines et spa ou des locaux collectifs et sanitaires.

Des exemples sont proposés afin d'illustrer l'invention, mais en aucun cas ils ne limitent la portée de l'invention.

### A - EXEMPLES DE COMPOSITION

Les différents pourcentages ci-dessous sont exprimés en poids par rapport au poids total de l'agent de nettoyage selon la présente invention.

| | Sels | Détergents dispersifs | Tensioactif détergent et/ou mouillant et/ou alcalins | Agent oxydant | Agent chélatant | Agent biocide |
|---|---|---|---|---|---|---|
| 1 | 99 % NaCl | 1 % TPPK¹ | - | - | | - |
| 2 | 98% NaCl | 1 % TPPK¹ | - | - | 1 % Gluconate de Na | - |
| 3 | 97,5 % NaCl | 1 % TPPK' | - | 1,5 % | | - |
| | | | | ECOX-C^{®} | | |
| | | | | 0,7 | | |
| 4 | 98,5 % NaCl | 1 % TPPK¹ | 0,5 % | - | | - |
| | | | SL11W² | | | |
| 5 | 99,5 % NaCl | 0,4 % TPPK¹ | - | - | | 0,1 % DDAC³ |
| 6 | 99,5 % NaCl | - | 0,3 % | - | | 0,2 % DDPT⁴ |
| | | | SL11W² | | | |
| 7 | 98% NaCl | 2 % TPPNa⁵ | - | - | | - |
| 8 | 97,5%NaCl | 0,5%TTPNa | - | 2 % PCNa⁶ | | - |
| 9 | 99% NaCl | 0,5 % TPPNa⁵ | - | - | 0,4% gluconate de Na | 0,1 % DDAC³ |
| 10 | 96% NaCl | 1% TPPNa | 1% CO₃Na₂ | 2% PCNa | 0,01 % gluconate de Na | |
| 11 | 96,5%NaCl | 0,5% TPPNa | 1% CO₃Na₂ | 2% PCNa | 0,01% gluconate de Na | |
| 12 | 96%NaCl | 0,5% TPPNa | 1% CO₃Na₂ | 2% PCNa | 0,5% gluconate de Na | |
| 13 | 98%NaCl | 0,5% TPPNa | 0,5% CO₃Na₂ | 1% PCNa | 0,01 % gluconate de Na | |
| 14 | 95,5%NaCl | 0,01% TPPNa | 1,5% CO₃Na₂ | 3% PCNa | 0,01% gluconate de Na | |

| | | | | | | |
|---|---|---|---|---|---|---|
| 1- TPPK : tripolyphosphate de potassium 2- SL 11 W : alkyl poly glucoside type SL11W 3- DDAC : le chlorure de didécyldiméthylammonium 4- DDPT : la dioctyldiéthylènetriamine 5- TPPNa : tripolyphosphate de sodium 6- PCNa : percarbonate de sodium | | | | | | |

### B - PROCÉDÉ DE FABRICATION DES PASTILLES

### Exemple 1 :

20 g de solution aqueuse de tripolyphosphate de potassium à 50 % (soit en matière sèche 10 g de tripolyphosphate de potassium) est pulvérisée directement sur 1 000 g de sel alcalin NaCl sous forme de poudre à l'aide d'une rampe de pulvérisation, le sel alcalin étant agité dans un mélangeur lent pendant la pulvérisation.

Un sel sous forme de poudre et contenant 1 % de détergent est ainsi obtenu.

La composition est ensuite facilement comprimée dans un pastilleur de laboratoire (SVIAC 92-ANTONY).

Une pastille à double fonction : régénérante et détergente est par conséquent obtenue.

### Exemple 2 :

Le gluconate de sodium, présenté sous forme de poudre, est mélangé directement avec le sel alcalin également sous forme de poudre, et la solution de TPPK 50 % est ensuite pulvérisée, comme indiqué dans l'exemple 1, sur ledit mélange.

La composition est ensuite facilement comprimée dans un pastilleur de laboratoire (SVIAC 92-ANTONY).

Une pastille à double fonction : régénérante et détergente est par conséquent obtenue.

### Exemple 3 :

Un prémélange à base de sel alcalin NaCl et de tripolyphosphate de potassium en solution aqueuse est réalisé, le tripolyphosphate de potassium étant pulvérisé sur le sel comme dans l'exemple 1. Un prémélange sous forme de poudre est alors obtenu.

Ensuite, un agent oxydant est mélangé à sec audit prémélange, l'agent oxydant étant un précurseur de peroxyde sous forme de granulé revêtu d'un revêtement protecteur de type ECOX-C 0,7 commercialisé par la société KEMIRA.

La composition est ensuite facilement comprimée dans un pastilleur de laboratoire (SVIAC 92-ANTONY).

Une pastille à la fois régénérante, détergente et prévenant l'adhésion des dépôts est par conséquent obtenue.

### Exempl e 4 :

Un prémélange à base d'un tensio-actif détergent mouillant : l'alkyl poly glucoside type SL11W sous forme liquide et d'une solution aqueuse de tripolyphosphate de potassium est réalisé. Ce prémélange est ensuite pulvérisé sur du sel alcalin NaCl, comme indiqué dans l'exemple 1.

La composition est ensuite facilement comprimée dans un pastilleur de laboratoire (SVIAC 92-ANTONY).

Une pastille présentant les propriétés d'être à la fois régénérante, détergente et mouillante est par conséquent obtenue.

### Exemple 5 :

Un prémélange à base d'un agent biocide: le chlorure de didécyldiméthylammonium sous forme liquide et d'une solution aqueuse de tripolyphosphate de potassium à 50 % est réalisé. Ce prémélange est ensuite pulvérisé sur du sel alcalin NaCl, comme indiqué dans l'exemple 1.

La composition est ensuite facilement comprimée dans un pastilleur de laboratoire (SVIAC 92-ANTONY).

Une pastille présentant les propriétés d'être à la fois régénérante, détergente (désincruste salissure) et qui élimine les germes pathogènes est par conséquent obtenue.

### Exemple 6 :

Un prémélange à base d'un agent biocide: la dioctyldiéthylènetriamine sous forme liquide et d'un tensioactif détergent mouillant : l'alkyl poly glucoside SL11W est réalisé. Ce prémélange est ensuite pulvérisé sur du sel alcalin NaCl, comme indiqué dans l'exemple 1.

La composition est ensuite facilement comprimée dans un pastilleur de laboratoire (SVIAC 92-ANTONY).

Une pastille présentant les propriétés d'être à la fois régénérante, détergente (désincruste salissure) et qui élimine les germes pathogènes est par conséquent obtenue.

### Exemple 7 :

Un mélange à base de sel alcalin NaCl poudre avec un détergent dispersant poudre : le tripolyphosphate de sodium ou tripolyphosphate de potassium est réalisé.

La composition est ensuite facilement comprimée dans un pastilleur de laboratoire (SVIAC 92-ANTONY).

Une pastille à double fonction : régénérante et détergente est par conséquent obtenue.

### Exemple 8 :

Un mélange à base de sel alcalin NaCl en poudre avec du tripolyphosphate de sodium ou de potassium en poudre et d'un précurseur de peroxydes : le percarbonate sodium en poudre est réalisé. La composition est ensuite facilement comprimée dans un pastilleur de laboratoire (SVIAC 92-ANTONY).

Une pastille à la fois régénérante, détergente et prévenant l'adhésion des dépôts est par conséquent obtenue.

### Exemple 9 :

Un agent biocide sous forme liquide : le chlorure de didécyldiméthylammonium est pulvérisé au préalable sur un détergent en poudre : le gluconate de sodium. Puis, ce prémélange est mélangé à sec avec un sel alcalin NaCl et un détergent dispersant (TPPNa).

La composition est ensuite facilement comprimée dans un pastilleur de laboratoire (SVIAC 92-ANTONY).

Une pastille présentant les propriétés d'être à la fois régénérante, détergente (désincruste salissure) et qui élimine les germes pathogènes est par conséquent obtenue.

### Exemples 10 à 14 :

Des mélanges à base de sel alcalin de chlorure de sodium en poudre avec du tripolyphosphate de sodium ou de potassium également sous forme de poudre, d'un détergent alcalin : le carbonate de sodium, d'un précurseur de peroxydes d'hydrogène : le percarbonate de sodium en poudre et d'un agent chélatant : le gluconate de sodium en poudre, sont réalisés selon différents dosages. Après compression de ces mélanges, des pastilles à la fois régénérantes, détergentes, chélatantes et prévenant l'adhésion de dépôts sont obtenues.

### C - ESSAI DE RÉGÉNÉRATION DES RÉSINES ÉCHANGEUSES D'IONS (pastille exemple 1)

Durant plusieurs mois (avec interruption et arrêt de 1 mois après 20 cycles de régénération), la régénération de résines cationiques (type AMBERLITE SRI-L-Na) de 2 échangeurs ioniques est suivie en comparatif :
- le premier échangeur ionique est régénéré avec des pastilles de sel NaCl pur (témoin)
- le deuxième est régénéré avec des pastilles double fonction de l'exemple 1.
Après 40 cycles, la surface des résines régénérées avec les pastilles double fonction de l'exemple 1 est propre, alors que sur la surface des résines de l'adoucisseur témoin, il apparaît un début de micro dépôt de salissures.

Ainsi, comparativement à une pastille de sel pur, une pastille selon l'invention, en plus d'apporter des ions Na+ en excès pour régénérer les résines, apporte les avantages suivants :
- un nettoyage périodique, à chaque cycle de régénération, des surfaces des résines des appareils d'échanges ioniques ;
- un maintien et une amélioration de la capacité d'échange des résines grâce au nettoyage et à l'entretien de leurs surfaces ;
- une prévention de dépôts de salissures telles que des sels métalliques du type Fe, Mn, Al, Pb... ou de tartre sur les surfaces des résines ;
- une prévention de l'adhésion des dépôts et donc d'accumulation des salissures ;
- une prévention du risque de corrosion des appareils d' échanges ioniques et des canalisations ;
- et l'agent de nettoyage selon la présente invention permet d'éviter l'usage de désinfectants agressifs pour les résines tels que le chlore, l'hypochlorite de soude, ou l'acide peracétique.

## Revendications

1. Agent de nettoyage préventif et/ou curatif de matériaux mis au contact d'eau comprenant :
- de 95 % à 98 % en poids de chlorure de sodium en tant que liant,
- de 0,01 % à 3 % en poids d'un agent détergent dispersif et/ou un tensioactif non ionique présentant une action détergente,
- de 0,01 % à 3 % en poids d'au moins un détergent alcalin, et
- de 0,01 à 3 % en poids d'au moins un précurseur de peroxyde d'hydrogène sous forme solide, par rapport au poids total de l'agent de nettoyage, ledit agent de nettoyage se présentant sous forme solide choisie parmi les formes suivantes : pastilles, granulés, tablettes, comprimés ou galets, les divers composants étant liés par le chlorure de sodium.

2. Agent de nettoyage selon la revendication 1, **caractérisé en ce que** ledit précurseur de peroxyde d'hydrogène sous forme solide est recouvert d'un revêtement mince protecteur à base de sels.

3. Agent de nettoyage selon la revendication 2, **caractérisé en ce que** le revêtement mince protecteur à base de sels est choisi parmi : le sulfate de sodium, de potassium, de calcium ou de magnésium.

4. Agent de nettoyage selon l'une des revendications 1 à 3, dans lequel le précurseur de peroxyde d'hydrogène sous forme solide est choisi parmi : les perborates alcalins, les percarbonates alcalins, les persulfates ou permonosulfates alcalins, les peroxydes alcalins, le permanganate de potassium, le ferrate de potassium ou leurs mélanges.

5. Agent de nettoyage selon l'une des revendications précédentes, **caractérisé en ce qu'**il comprend un catalyseur spécifique de décomposition du peroxyde d'hydrogène, tel que les sels métalliques de fer, de cuivre, de cobalt, de zinc, de molybdène, d'argent ou leurs mélanges.

6. Agent de nettoyage selon l'une des revendications précédentes, **caractérisé en ce qu'**il comprend un stabilisant du peroxyde d'hydrogène, tel que les chélates : les phosphonates, les gluconates de sodium, les pyrophosphates de sodium acides, les phosphates monocalciques ; ou des acides organiques : l'acide citrique, l'acide maléique, l'acide tartrique ; ou l'acétanilide ; ou des agents anti-mottants : silices précipitées ; ou leurs mélanges.

7. Agent de nettoyage selon l'une des revendications précédentes, **caractérisé en ce que** ledit agent détergent dispersant est choisi parmi : le tripolyphosphate de sodium, le tripolyphosphate de potassium, le silicate de sodium ou de potassium, le métasilicate de sodium ou de potassium, le gluconate de sodium ou leurs mélanges et ledit tensio-actif non ionique présentant au moins une action détergente est choisi parmi : les savons gras, les alkylpolyglucosides, les oxydes d'amines, les esters de polyols, les alkanolamides, les saponines ou leurs mélanges.

8. Agent de nettoyage selon l'une des revendications précédentes, **caractérisé en ce qu'**il comprend :
- de 95 % à 98 %, en poids de chlorure de sodium,
- de 0,5 % à 3 % en poids d'au moins un agent détergent dispersif et/ou un tensioactif non ionique présentant une action détergente,
- de 0,5 % à 3 % en poids d'au moins un détergent alcalin
- de 1 % à 3 % en poids, d'au moins un précurseur de peroxyde d'hydrogène sous forme solide, par rapport au poids total de l'agent de nettoyage.

9. Agent de nettoyage selon l'une des revendications 1 à 7, **caractérisé en ce qu'**il comprend:
- de 95,5 % à 98 % de chlorure de sodium,
- de 0,01 % à 3 % de tripolyphosphate de sodium,
- de 0,5 % à 1,5 % de carbonate de sodium,
- de 1 % à 3 % de percarbonate de sodium et
- de 0,01 % à 0,5 % de gluconate de sodium, en poids, par rapport au poids total de l'agent de nettoyage, pour l'application dans les appareils d'échanges ioniques comme au sein des adoucisseurs d'eau.

10. Procédé de fabrication d'un agent de nettoyage selon l'une des revendications précédentes comprenant les étapes consistant à :
- pulvériser avec de l'eau sur le chlorure de sodium et éventuellement sur divers additifs sous forme solide préalablement mélangés avec ledit chlorure de sodium, au moins un précurseur de peroxyde d'hydrogène sous forme solide, au moins un composé détergent, et/ou divers additifs sous forme liquide, de manière à obtenir un mélange sous forme solide ;
- éventuellement, mélanger le mélange obtenu à l'étape précédente avec au moins un composé détergent et/ou des additifs sous forme solide ;
- et à mouler l'agent de nettoyage dans la forme souhaitée : pastilles, granulés, tablettes, comprimés ou galets.

11. Utilisation de l'agent de nettoyage selon l'une des revendications 1 à **9** ou obtenu selon le procédé de la revendication **10,** pour le nettoyage préventif et/ou curatif de matériaux mis en contact d'eau tels que des résines échangeuses d'ions, des appareils d'échanges ioniques comme les adoucisseurs d'eau, des lave-vaisselle, des filtres, et des circuits d'eaux de piscines, de spa et de locaux collectifs et sanitaires.

## Claims

1. An agent for preventive and/or curative cleaning of materials put into contact with water, comprising:
- from 95% to 98% by weight of sodium chloride as a binder,
- from 0.01% to 3% by weight of a dispersive detergent and/or a non-ionic surfactant having detergent action,
- from 0.01 % to 3% by weight of at least one alkaline detergent, and
- from 0.01 to 3% by weight of at least one hydrogen peroxide precursor in solid form, based on the total weight of the cleaning agent, said cleaning agent appearing in a solid form selected from the following forms: pellets, granules, tablets, compressed tablets or pebbles, the various components being bound by sodium chloride.

2. The cleaning agent according to claim 1, **characterized in that** said hydrogen peroxide precursor in solid form is covered with a thin protective coating based on salts.

3. The cleaning agent according to claim 2, **characterized in that** the thin protective coating based on salts is selected from: sodium, potassium, calcium or magnesium sulfate.

4. The cleaning agent according to one of claims 1 to 3, wherein the hydrogen peroxide precursor in solid form is selected from: alkaline perborates, alkaline percarbonates, alkaline persulfates or permonosulfates, alkaline peroxides, potassium permanganate, potassium ferrate or mixtures thereof.

5. The cleaning agent according to one of the preceding claims, **characterized in that** it comprises a specific catalyst for decomposition of hydrogen peroxide, such as iron, copper, cobalt, zinc, molybdenum, silver metal salts or mixtures thereof.

6. The cleaning agent according to one of the preceding claims, **characterized in that** it comprises a stabilizer of hydrogen peroxide, such as chelates: phosphonates, sodium gluconates, acid sodium pyrophosphates, monocalcium phosphates; or organic acids: citric acid, maleic acid, tartaric acid; or acetanilide; or anti-caking agents: precipitated silicas; or mixtures thereof.

7. The cleaning agent according to one of the preceding claims, **characterized in that** said dispersive detergent is selected from: sodium tripolyphosphate, potassium tripolyphosphate, sodium or potassium silicate, sodium or potassium metasilicate, sodium gluconate or mixtures thereof and said non-ionic surfactant having at least detergent action is selected from: fatty soaps, alkylpolyglucosides, amine oxides, polyol esters, alkanolamides, saponins or mixtures thereof.

8. The cleaning agent according to one of the preceding claims, **characterized in that** it comprises:
- from 95% to 98% by weight of sodium chloride,
- from 0.5% to 3% by weight of at least one dispersive detergent and/or non-ionic surfactant having detergent action,
- from 0.5% to 3% by weight of at least one alkaline detergent, and
- from 1% to 3% by weight of at least one hydrogen peroxide precursor in solid form, based on the total weight of the cleaning agent.

9. The cleaning agent according to one of claims 1 to 7, **characterized in that** it comprises:
- from 95.5% to 98% of sodium chloride,
- from 0.01% to 3% of sodium tripolyphosphate,
- from 0.5% to 1.5% of sodium carbonate,
- from 1% to 3% of sodium percarbonate and
- from 0.01% to 0.5% of sodium gluconate, by weight, based on the total weight of the cleaning agent, for application in ion exchange apparatuses like inside water softeners.

10. A method for manufacturing a cleaning agent according to one of the preceding claims comprising the steps:
- spraying water on the sodium chloride and optionally on various additives in solid form mixed beforehand with said sodium chloride, at least one hydrogen peroxide precursor in solid form, at least one detergent compound, and/or various additives in liquid form, so as to obtain a mixture in solid form;
- optionally, mixing the mixture obtained in the previous step with at least one detergent compound and/or additives in solid form;
- and molding the cleaning agent into the desired form: pellets, granules, tablets, compressed tablets or pebbles.

11. The use of the cleaning agent according to one of claims 1 to 9 or obtained according to the method of claim 10, for preventive and/or curative cleaning of materials put into contact with water such as ion exchange resins, ionic exchange apparatuses such as water softeners, dishwashers, filters, and water circuits of swimming pools, of spas and of collective and sanitary premises.

## Patentansprüche

1. Mittel zur vorbeugenden und/oder heilenden Reinigung von Materialien im Kontakt mit Wasser, das umfasst:
- 95 bis 98 Gew.-% Natriumchlorid als Bindemittel,
- 0,01 bis 3 Gew.-% eines dispersiven waschaktiven Mittels und/oder ein nichtionisches Tensid, das eine waschaktive Wirkung aufweist,
- 0,01 bis 3 Gew.-% mindestens eines alkalischen Reinigungsmittels, und
- 0,01 bis 3 Gew.-% mindestens eines Wasserstoffperoxidvorläufers in fester Form im Verhältnis zum Gesamtgewicht des Reinigungsmittels, wobei das Reinigungsmittel in fester Form vorliegt, die aus den folgenden Formen ausgewählt ist: Pastillen, Granulat, Tabs, Tabletten oder Steine, wobei die verschiedenen Bestandteile durch das Natriumchlorid verbunden sind.

2. Reinigungsmittel nach Anspruch 1, **dadurch gekennzeichnet, dass** der Wasserstoffperoxidvorläufer in fester Form mit einem dünnen Schutzüberzug auf Salzbasis bedeckt ist.

3. Reinigungsmittel nach Anspruch 2, **dadurch gekennzeichnet, dass** der dünne Schutzüberzug auf Salzbasis aus dem Natrium-, Kalium-, Kalzium- oder Magnesiumsulfat ausgewählt ist.

4. Reinigungsmittel nach einem der Ansprüche 1 bis 3, wobei der Wasserstoffperoxidvorläufer in fester Form aus den alkalischen Perboraten, den alkalischen Percarbonaten, den alkalischen Persulfaten oder Permonosulfaten, den alkalischen Peroxiden, dem Kaliumpermanganat, dem Kaliumferrat oder ihren Gemischen ausgewählt ist.

5. Reinigungsmittel nach einem der vorangehenden Ansprüche, **dadurch gekennzeichnet, dass** es einen speziellen Katalysator des Zerfalls des Wasserstoffperoxids umfasst, wie die Metallsalze von Eisen, von Kupfer, von Kobalt, von Zink, von Molybdän, von Silber oder ihren Gemischen.

6. Reinigungsmittel nach einem der vorangehenden Ansprüche, **dadurch gekennzeichnet, dass** es einen Stabilisator des Wasserstoffperoxids umfasst, wie die Chelate: die Phosphonate, die Natriumgluconate, die sauren Natriumpyrophosphate, die Monocalciumphosphate; oder organische Säuren: die Citronensäure, die Maleinsäure, die Weinsäure; oder das Acetanilid, oder klumpenverhindernde Mittel: ausgefälltes Quarzgut; oder ihre Gemische.

7. Reinigungsmittel nach einem der vorangehenden Ansprüche, **dadurch gekennzeichnet, dass** das dispergierende waschaktive Mittel aus dem Natriumtripolyphosphat, dem Kaliumtripolyphosphat, dem Natrium- oder Kaliumsilikat, dem Natrium- oder Kaliummetasilikat, dem Natriumgluconat oder ihren Gemischen ausgewählt ist und das nichtionische Tensid, das mindestens eine waschaktive Wirkung aufweist, aus den fetten Seifen, den Alkylpolyglucosiden, den Aminoxiden, den Polyolestern, den Alkanolamiden, den Saponinen oder ihren Gemischen ausgewählt ist.

8. Reinigungsmittel nach einem der vorangehenden Ansprüche, **dadurch gekennzeichnet, dass** es umfasst:
- 95 bis 98 Gew.-% Natriumchlorid,
- 0,5 bis 3 Gew.-% mindestens eines dispersiven waschaktiven Mittels und/oder ein nichtionisches Tensid, das eine waschaktive Wirkung aufweist,
- 0,5 bis 3 Gew.-% mindestens eines alkalischen Reinigungsmittels,
- 1 bis 3 Gew.-% mindestens eines Wasserstoffperoxidvorläufers in fester Form im Verhältnis zu Gesamtgewicht des Reinigungsmittels.

9. Reinigungsmittel nach einem der Ansprüche 1 bis 7, **dadurch gekennzeichnet, dass** es umfasst:
- 95,5 bis 98 % Natriumchlorid,
- 0,01 bis 3 % Natriumtripolyphosphat,
- 0,5 bis 1,5 % Natriumcarbonat,
- 1 bis 3 % Natriumpercarbonat und
- 0,01 bis 0,5 Gew.-% Natriumgluconat im Verhältnis zum Gesamtgewicht des Reinigungsmittels für die Anwendung in Ionenaustauschgeräten wie innerhalb von Wasserweichmachern.

10. Herstellungsverfahren eines Reinigungsmittels nach einem der vorangehenden Ansprüche, das die Schritte umfasst, die darin bestehen:
- Versprühen mit Wasser auf das Natriumchlorid und eventuell auf verschiedene Zusatzstoffe in fester Form, die zuvor mit dem Natriumchlorid gemischt wurden, mindestens eines Wasserstoffperoxidvorläufers in fester Form, mindestens einer waschaktiven Verbindung und/oder verschiedener Zusatzstoffe in flüssiger Form, um ein Gemisch in fester Form zu erhalten,
- eventuell Mischen des in vorangehendem Schritt erhaltenen Gemischs mit mindestens einer waschaktiven Verbindung und/oder Zusatzstoffen in fester Form,
- und Formen des Reinigungsmittel in der gewünschten Form: Pastillen, Granulat, Tabs, Tabletten oder Steine.

11. Verwendung des Reinigungsmittels nach einem der Ansprüche 1 bis 9 oder des gemäß dem Verfahren nach Anspruch 10 gewonnen Reigungsmittels zur vorbeugenden und/oder heilenden Reinigung von Materialien im Kontakt mit Wasser, wie Ionenaustauscherharze, Ionenaustauschergeräte wie Wasserweichmacher, Geschirrspülmaschinen, Filter und Wasserkreisläufe von Schwimmbecken, Spas und Gemeinschafts- und Sanitärräumen.
